# EUROPEAN PATENT SPECIFICATION

(11) **EP 3 270 569 B1**
(45) Date of publication and mention of the grant of the patent: **13.01.2021**
(21) Application number: 16179466.4
(22) Date of filing: 14.07.2016
(51) Int. Cl.: H04L 29/14, H04L 29/08, H04L 29/06

(54) **NETWORK PROTECTION ENTITY AND METHOD FOR PROTECTING A COMMUNICATION NETWORK AGAINST MALFORMED DATA PACKETS**
NETZWERKSCHUTZEINHEIT UND VERFAHREN ZUM SCHUTZ EINES KOMMUNIKATIONSNETZWERKS GEGEN FALSCH FORMATIERTE DATENPAKETE
ENTITÉ DE PROTECTION DE RÉSEAU ET PROCÉDÉ DE PROTECTION D'UN RÉSEAU DE COMMUNICATION CONTRE DES MESSAGES FRAUDULEUX

(43) Date of publication of application: 17.01.2018
(73) Proprietor: Deutsche Telekom AG, 53113 Bonn (DE)
(72) Inventor: VAN DEN BERGE, Fridtjof, 53227 Bonn-Oberkassel (DE); MÜHLENDER, Uwe, 53227 Bonn (DE)
(74) Representative: Vossius & Partner Patentanwälte Rechtsanwälte mbB

(56) References cited:
- EP-B1- 1 284 573
- US-B1- 7 769 851

## Description

### TECHNICAL FIELD

The present disclosure relates to a network protection entity for protecting a communication network against malformed data packets, e.g. arising from fraud messages or faults and to a method for protecting a communication network against malformed data packets. In particular, the disclosure relates to new IP (Internet Protocol) defense techniques.

### BACKGROUND

In criminal intended IP (Internet Protocol)-messaging, with scenarios as examples ARP (Address Resolution Protocol)-, DHCP (Dynamic Host Control Protocol)-, MAC (Media Access Control)-, spoofing-attacks, as well as the so called VLAN (Virtual Local Area Network) "Hopping", the attacks on networks or instances on the specific network are in the majority of cases on the Open System Interconnection Layer 3 (OSI-Layer 3) level, the so called Network Layer (i.e., gateway or router), of a network.

Firewalls, loadbalancers and control lists (e. g. an access control list, ACL, as used as a blacklist or whitelist on network routers) are the usual ways to defend the network against attacks on the basis of the available OSI-L3 information. Simple IP-flooding as applied in a MAC- or port-flooding of a network can bring this network to collapse through the enormous amount of requests it has to answer upon which no TCP (Transmission Control Protocol)-stream comes in and upon which the router sends acknowledge-messages out over and over again. In such a process, the processor of the (router) node may seriously come in overload and gets slower to collapse after a *very* short time. Thus a breakdown would happen as a limit is exceeded and the connection is lost or at least interrupted for some time. Such interruption or link failure can lead to a significant problem in the network for its own customers, their connections and visiting roaming clients. The document US 7 769 851, 3rd August 2010 (2010-08-03), discloses an intrusion detection and prevention (IDP) device with a data flow analysis module, an analysing machine, a plurality of different protocol specific decoders, and a profile generator.

There is a need for better protection of communication networks against malformed data packets resulting from fraud messages of criminal users or from network failures.

### SUMMARY

It is the object of the invention to provide such protection of communication networks against malformed data packets.

This object is achieved by the features of the independent claims. Further implementation forms are apparent from the dependent claims, the description and the figures.

The essential idea of the invention is to check the OSI-L3 and -L7 informations of an incoming stream in parallel, by mirroring it from the gateway/router onto the (internal- or external-) instance for checking the information. Thus the before mentioned (internal- or external-) instance to a router would simply monitor traffic towards any destination and wouldn't add to any already occuring delay-times within the router.

Any message sent to a network, enters the network over a gateway at the edge of the network (external), or over a network's router (internal). Several parameter can identify traffic, as for instance source to destination IP and port-parameter are a subset, or a line-ID to a stream can be such a subset. Any attacks, such as for instance any kind of flooding, are methods which are making the network- respectively IP-security quite vulnerable and will remain as such for also newer criminal intended scenarios. The actual idea, as a solution to this, is in the line of making a parallel check on different OSI-layers of an incoming message (packet / stream), beside the routing information based on for instance its source and destination: Messages entering on an Open System Interconnection-layer 3, OSI-L3, the Network Layer [see RFC 1122] can be checked in a parallel fashion to an OSI-layer 7, the Application Layer [see RFC 1123] information, within the header.

Through the here described new IP-network defense method against for instance flooding-attacks against a network or network instance a method is described which provides an effective protection against such attacks and a learning effect as well by tranfer of information related to detected abnormalities to other gateway-/routing-instances.

In order to describe the invention in detail, the following terms, abbreviations and notations will be used:
- ACL:: Access Control List
- ARP:: Address Resolution Protocol
- DHCP:: Dynamic Host Control Protocol
- FPLMN:: Foreign Public Land Mobile Network
- HPLMN:: Home Public Land Mobile Network
- IP:: Internet Protocol
- ISO:: International Standardization Organization
- ISP:: Internet Service Provider
- IXP:: Internet Exchange Point
- MAC:: Media Access Control
- OSI:: Open Systems Interconnection Model
- TCP:: Transmission Control Protocol
- VLAN:: Virtual Local Area Network

Methods and devices according to the disclosure may be configured to check data packets based on a relation of OSI-layer 3 information and OSI-layer 7 information. The OSI Reference Model (officially known as ISO Standard 1984, 7498-1:1994 and CCITT standard X.200) was developed by the Internet Architecture Board and drafted by the IETF. OSI-layer 3, also referred to as network layer, provides the functional and procedural means of transferring variable length data sequences or data packets (called datagrams) from one network node to another connected to the same *network.* It translates logical network address into physical machine address. A network is a medium to which many network nodes can be connected, on which every network node has a network *address* and which permits network nodes connected to it to transfer messages to other network nodes connected to it by merely providing the content of a message and the network address of the destination node and letting the network find the way to deliver the message to the destination network node, possibly routing it through intermediate network nodes. Network address information or L3 information as described hereinafter is information related to the network layer or OSI-layer 3. Network address information can be obtained from the stream of data packets.

OSI-layer 7, also referred to as application layer, is an abstraction layer that specifies the shared protocols and interface methods used by hosts in a communication network. The application layer is the OSI layer closest to the end user, which means both the OSI application layer and the user interact directly with the software application. This layer interacts with software applications that implement a communicating component. Application-layer functions typically include identifying communication partners, determining resource availability, and synchronizing communication. When identifying communication partners, the application layer determines the identity and availability of communication partners for an application with data to transmit. When determining resource availability, the application layer decides whether sufficient network resources for the requested communication exist. In synchronizing communication, all communication between applications requires cooperation that is managed by the application layer. This layer supports application and end-user processes. Communication partners are identified, quality of service is identified, user authentication and privacy are considered, and any constraints on data syntax are identified. Everything at this layer is application-specific. Application information or L7 information as described hereinafter is information related to the application layer or OSI-layer 7 application information can be obtained from the stream of data packets.

According to a first aspect, the invention relates to a network protection entity for protecting a communication network against malformed data packets, the network protection entity comprising: an interface to a network entity within the communication network, wherein the network entity is configured to transfer a stream of data packets entering the network entity based on network address information comprised in the data packets; a memory configured to temporarily store the network address information together with application information comprised in the data packets, wherein the application information indicates application and support protocols for communication via the communication network; a processor configured to detect an abnormality in the stream of data packets based on checking a relation between the application information and the network address information of the data packets; and if an abnormality is detected to transmit information about the abnormality to the network entity for discarding data packets showing the abnormality.

Such a network protection entity provides better protection of communication networks against malformed data packets resulting from fraud messages of criminal users or from network failures. By checking a relation between the application information and the network address information of the data packets a better protection can be guaranteed because an attacker usually uses simple procedure to generate fraud messages, for example flooding a network by a multiplicity of the same packets or at least similar constructed packets. Currently no attack is known in which a fake message is constructed in which network address information is sent together with the correct application information because the correct application information is not known to an attacker. Therefore, such network protection entity provides an efficient protection against any kind of malformed packets.

In an implementation of the network protection entity, the network address information corresponds to Layer 3 information according to the Open Systems Interconnection (OSI) model; and the application information corresponds to Layer 7 information according to the OSI model.

This provides the advantage that such Layer 3 information and Layer 7 information is standardized. Hence the network protection entity knows in advance the (packet) structure of L3/L7 information. Thus the information can be easily extracted from the steam of data packets.

In an implementation of the network protection entity, the processor is configured to detect an abnormality in the stream of data packets if a number of request messages sent for a specific application protocol and a specific destination address exceeds a given threshold.

This provides the advantage that a message flooding can be efficiently suppressed. Usually a high level application, such as a browser command initiating a file transfer or opening a web site requires a specific number of request messages. When permitting a threshold number of such request messages, the application can be finished while the message flooding can be kept down. Such a threshold value may be for example in the range between 50 and 400, in particular 100, 200 or 300.

In an implementation of the network protection entity, the processor is configured to detect an abnormality in the stream of data packets if a threshold number of identical data packets is identified in the stream of data packets.

This provides the advantage that the most common and simple attack against a network which uses a flood of identical data packets can be efficiently detected and prohibited. Such a threshold number can be smaller than the threshold number required for detecting if a number of request messages sent for a specific application protocol is higher than allowed. Such a threshold value may be for example in the range between 2 and 50, in particular 10, 20, 30 or 40.

In an implementation of the network protection entity, the processor is configured to detect an abnormality in the stream of data packets if a threshold number of requests onto which a reply was sent out is identified in the stream of data packets.

This provides the advantage that the scenario of SYN flooding can be efficiently detected and avoided where the attacker sends out a multiplicity of SYN request messages where reply messages are expected in order to provoke a shutdown of the target server.

In an implementation of the network protection entity, the processor is configured to detect the abnormality in the stream of data packets if the requests have no evolving message string related to the reply.

This provides the advantage that the scenario of SYN flooding can be detected with a higher precision because each real request will have an evolving message string related to the reply, for example a sequence number of any parameter related to the reply. By comparing these information an efficient detection of malformed messages can be realized.

In an implementation of the network protection entity, the relation between the application information and the network address information of the data packets is based on at least one of the following: a combination of a source address with a destination address, an amount of data packets directed to a destination address exceeding a threshold, a combination of a destination port with a destination address, a combination of a line ID with a stream ID, a combination in an IP-stream of an application protocol with a port number.

This provides the advantage that an efficient protection can be implemented. An application layer protocol, for example a "https" or an "http" request is sent out at a specific port number, for example on port 80 for "http" or port 443 for "https". When this combination of application protocol type with port number is checked, it is easy to detect if the request is from an- or multiple attacking source(-s) or from a real network node.

In an implementation of the network protection entity, the network address information comprises routing information for routing the stream of data packets.

This provides the advantage that this routing information is only known to the router and not to the attacking instance. Hence an efficient discrimination between real data packets and malformed or faked data packets can be implemented.

In an implementation of the network protection entity, the processor is configured to detect the abnormality in the stream of data packets if the routing information does not correspond with routing information of a routing protocol comprised in the application information.

This provides the advantage that the routing information of the routing protocol is not known to the attacking source and therefore an efficient discrimination between real data packets and malformed or faked data packets can be realized.

In an implementation of the network protection entity, the processor is configured to detect the abnormality in the stream of data packets if information about an incoming routing and port from the routing information does not correspond with corresponding information of a Next Hop Routing Protocol (NHRP) from the application information.

This provides the advantage that the routing information from the Next Hop Routing Protocol (NHRP) is not accessible by the attacker and can be used as a reliable distinguishing feature to detect malformed data packets.

In an implementation of the network protection entity, the processor is configured to mirror the stream of data packets in the memory and to decrypt the stream of data packets to obtain the network address information and the application information.

This provides the advantage that the network protection entity has enough time to detect an abnormality in the incoming data packets because they are temporarily stored in the memory. Besides a possible decryption can be efficiently performed when the incoming data packets are stored in the memory because the processor has then access to past data packets.

in an implementation of the network protection entity, the processor is configured to transmit information about the detected abnormality to other network entities within the communication network.

This provides the advantage that results of the network protection entity can be shared with other elements in the communication network and even with other network nodes in other communication networks. I.e. only one network protection entity is required for protection of a whole communication network and even a multiplicity of communication networks.

In an implementation of the network protection entity, the network protection entity is cooperating with other network protection entities to protect the communication network against malformed data packets, and the processor is configured to mark data packets of the stream of data packets already checked for an abnormality and to only transfer non-marked data packets to the memory for detecting on abnormality.

This provides the advantage that the network protection task can be efficiently shared between multiple network protection entities. A data packet already checked by one network protection entity is marked as being checked, so all other network protection entities know that this marked data packet is safe and does not have to be checked twice.

According to a second aspect, the invention relates to a network protection system for protecting a communication network against malformed data packets, the network protection system comprising: a network protection entity according to the first aspect or any one of its implementation forms; and a network entity within the communication network, wherein the network entity is configured to transfer a stream of data packets entering the network entity based on network address information comprised in the data packets.

Such a network protection system provides better protection of communication networks against malformed data packets resulting from fraud messages of criminal users or from network failures. By checking a relation between the application information and the network address information of the data packets a better protection can be guaranteed because an attacker usually uses simple procedure to generate fraud messages, for example flooding a network by a multiplicity of the same packets or at least similar constructed packets. Currently no attack is known in which a fake message is constructed in which network address information is sent together with the correct application information because the correct application information is not known to an attacker. Therefore, such network protection system provides an efficient protection against any kind of malformed packets, without adding to the delay times which occur in a router as the header information has to be read. This reading of the header information is the computing which is mirrored onto the instance, which is responsible for the traffic-monitoring to avoid any kind of e. g. floods. As such it works as an independent unit within the entire routing-entourage of the node with an internal-/external instance.

In an implementation of the network protection system, the network entity is a network router or a network gateway at an access point of the communication network or within the communication network.

This provides the advantage of high flexibility. Any router or gateway located in the own or in a foreign network can be easily equipped with such network protection entity.

According to a third aspect, the invention relates to a method for protecting a communication network against malformed data packets, the method comprising: transferring a stream of data packets based on network address information comprised in the data packets; temporarily storing the network address information together with application information comprised in the data packets, wherein the application information indicates application and support protocols for communication via the communication network; detecting an abnormality in the stream of data packets based on checking a relation between the application information and the network address information of the data packets; and if an abnormality is detected, discarding data packets showing the abnormality.

Such a network protection method provides better protection of communication networks against malformed data packets resulting from fraud messages of criminal users or from network failures. By checking a relation between the application information and the network address information of the data packets a better protection can be guaranteed because an attacker usually uses simple procedure to generate fraud messages, for example flooding a network by a multiplicity of the same packets or at least similar constructed packets. Currently no attack is known in which a fake message is constructed in which network address information is sent together with the correct application information because the correct application information is not known to an attacker. Therefore, such network protection method provides an efficient protection against any kind of malformed packets.

Devices, methods and systems according to the disclosure can realize the following advantages.

Messages are sent on certain OSI layers, with which they find certain parameter as presets for gaining access to a gateway. Just at this gaining access through a gateway or router to a network, the gateway may have an (internal- or external-) instance which checks the way the IP-request entered the network and its further heading. The network's clients' hardware can be infected by malware without being aware of it. By this checking instance the routing towards certain nodes can be checked and monitored, also in the eventual not occuring sending of a likely TCP-stream after the appropriate acknowledge-message towards the initial sender.

A message can be sent on an OSI layer 3 (Network Layer) and forwarded on the so called MAC OSI-layer 2 (Data Link Layer) towards an IP-address and a logical port. A message which is sent out on OSI layer 3 is checked on and has been forwarded on the existing layer. In conducting a parallel checking on L3- and L7-informations, any abnormalities in message-headers can quickly be picked out and requests and/or messages discarded. Malformed packets (e. g. DNS, DNSSEC, HTTP, HTTPS, SIP, TCP, UDP) can be actively removed, thus avoiding further mayhem within the network. As such no redirection of traffic is necessary, as it is monitored on certain presets. A quantity of sent request-messages can be such a parameter, in conjunction with their destination and probably also its source. The last may not be fixed and is related to probably the amount of infected hardware which is involved in the sending out of malformed packets

As various web masks require a certain amount of requests to be able to sent in the acquired streams to build up a portal, a certain threshold can be applied in routing instances of ISP-networks, as a preset. As an example, if a usual portal is built after a 100 sent requests and much more complicated ones may even need streams which can be generated after somewhat over 300 requests, a static blocking can be applied for as an example over 400 requests coming to a destination.

The network protection techniques as desribed hereinafter are a solution for all data- and IP-networks, by handling attacks on a flooding-like scenario (e. g. DDoS-attack on the infrastructure). The network protection entities may be designed to add nothing to latencies already occuring in transmissions.

### BRIEF DESCRIPTION OF THE DRAWINGS

Further embodiments of the invention will be described with respect to the following figures, in which:
Fig. 1 shows a block diagram illustrating a network protection system 100 with a network entity 101 implemented as a gateway and/or router and a network protection entity 103 for protecting a communication network against malformed data packets according to an implementation form;
Fig. 2 shows a block diagram illustrating a network protection system 200 with a network entity 201 and a network protection entity 203 for protecting a communication network against malformed data packets according to an implementation form;
Fig. 3 shows a block diagram illustrating a communication system 300 with a network protection entity 302 protecting a communication network 301 against malformed data packets from another communication network 321 according to an implementation form;
Fig. 4 shows a block diagram illustrating a communication system 400 with a network protection entity 302 protecting a communication network 301 against malformed data packets from the same communication network 301 according to an implementation form;
Fig. 5 shows a block diagram illustrating a communication system 500 with multiple network protection entities 504, 507, 509, 511 protecting a communication network 501 against malformed data packets from the same communication network 501 and against malformed data packets from another communication network 541 according to an implementation form; and
Fig. 6 shows a schematic diagram illustrating a method 600 for protecting a communication network against malformed data packets according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following description, devices, methods and systems for protecting communication networks against malformed data packets are described. The described devices and systems point at functionalities, but may be named differently depending on e. g. manufacturer and development-status of such nodes, may include integrated circuits and/or passives and may be manufactured according to various technologies. For example, the circuits may include logic integrated circuits, analog integrated circuits, mixed signal integrated circuits, optical circuits, memory circuits and/or integrated passives.

In the following description, devices, methods and systems that may use trunks or connection trunks, are described. Trunking is referred to as a method for providing network access to many clients by sharing a set of lines or accesses instead of providing them individually. A trunk may be defined as a permanent point-to-point communication line between two ports of a communication entity, e.g. a gateway. In the context of Ethernet, the term Ethernet trunking specifies carrying multiple VLANs (virtual local area networks) through a single network link through the use of a trunking protocol. To allow for multiple VLANs on one link, frames from individual VLANs are identified.

The devices, methods and systems described hereinafter can be applied for protecting the routing in the transmission of a message within the OSI layer 3, where for instance in the source-address-table, SAT, an entry is made of the MAC-address with the physical port. They can further be applied for protecting against message flooding. In a flooding-scenario against a network many queries or requests are received in which the similar is queried. As the machines are handling these floods (for esample (D)DoS-attack, SYN-flood, etc.) of identical queries, new additional queries come along and will lead to a possible breakdown. By using network protection entities as described hereinafter, these effects can be avoided.

The devices, methods and systems described hereinafter can be applied together with other actions against SYN-floods such as the use of firewalls, which handle the floods with a real-time analysis to recognize the used attack pattern and to recycle the oldest half-started TCP-connectivity. They can be applied together with the use of proxy servers in the network and/or the use of route set test (RST)-cookies.

The devices, methods and systems described hereinafter can be applied to protect against DoS and DDoS-attacks and IP-spoofing. A Denial of Service (DoS) attack is an attack, in which a single internet connected device (one network connection) is used to flood targeted resource, as a destination, with packets. A Distributed Denial of Service (DDoS) attack is launched from numerous compromised devices, often distributed globally in what is referred to as a botnet. IP-spoofing, in which another IP-address is used for the transmission, suggests the use of an address to mislead the receiving party.

The devices, methods and systems described hereinafter can be applied to protect against manifold attacks such as for example application attacks (such as: DNS attacks, HTTP GET floods, HTTPS protocol attacks, SIP invite floods, etc.), DNS cache poisoning, Flood attacks (such as: DNS, ICMP, NTP Amplification/Reflection, TCP, UDP, etc.), Fragmentation attacks (such as: Jolt2, Nestea, Targa3, Teardrop, etc.), IPv4- and IPv6-attacks hidden in SSL encrypted packets, Resource , as a destination, exhaustion attacks (such as: LOIC, Pyloris, Slowloris, etc.), TCP stack attacks (such as: FIN, RST, SYN, SYN ACK, TCP Flags, URG-PSH, etc.).

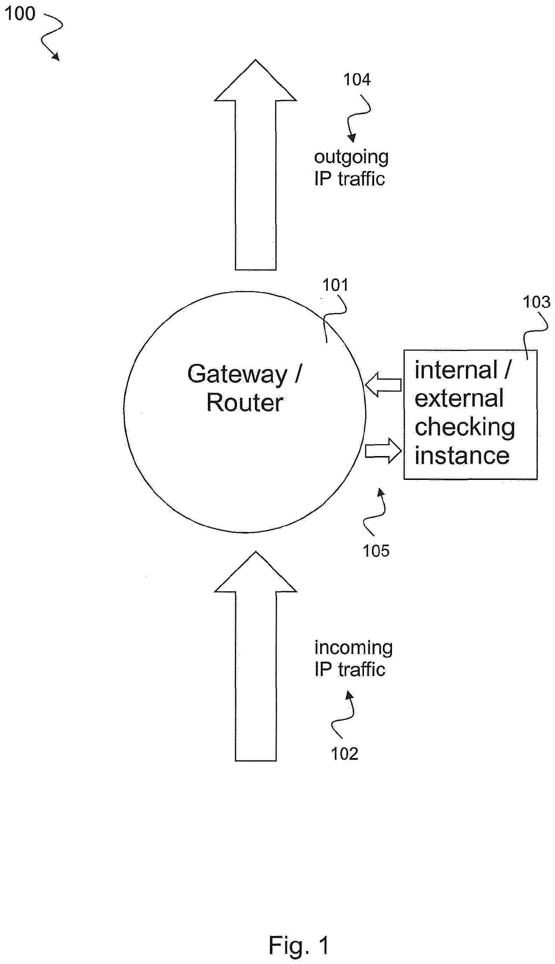

Fig. 1 shows a block diagram illustrating a network protection system 100 with a network entity 101 implemented as a gateway and/or router and a network protection entity 103 for protecting a communication network against malformed data packets according to an implementation form.

The network entity 101 receives a stream 102 of incoming IP traffic 102 and provides a stream 104 of outgoing IP traffic. An internal or external checking instance 103 is coupled to the network entity 101 by an interface 105 to receive the incoming IP traffic 102 and check this IP traffic 102 for abnormalities as described in the following.

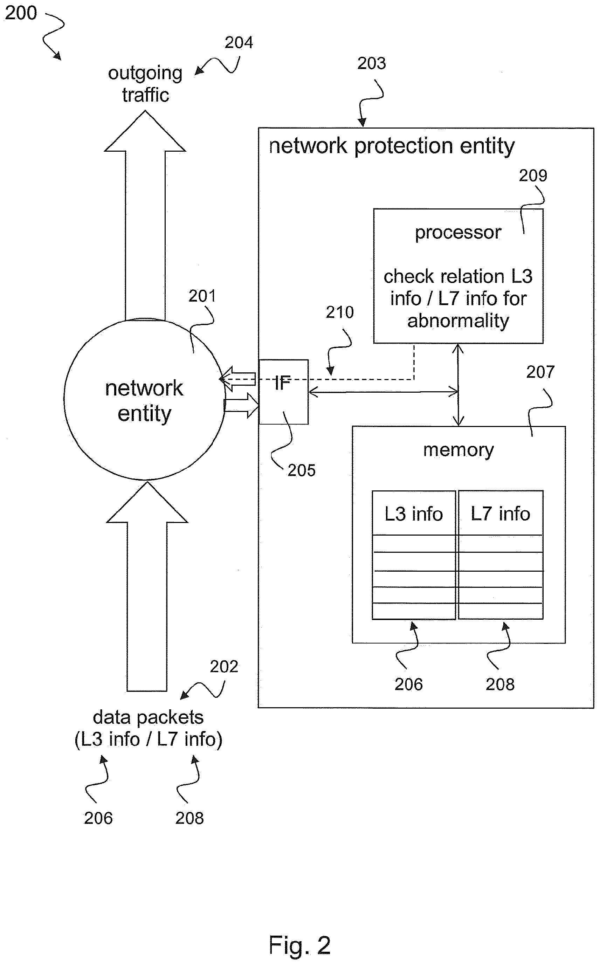

A processor or multiple processors in the checking instance 103 may check the OSI-L3 and -L7 information of an incoming stream 102 in parallel, by mirroring it from the gateway/router 101 onto the (internal- or external-) instance 103 for checking the parameter, e.g. as described below with respect to Fig. 2. The instance which performs the cross-checks on the incoming IP-traffic does not budge, as such. Hence, this instance does not cause an additional delay, as it is in an independent position, either as an external entity or integrated in a routing instance 101, but tells the routing instance 101 to discard the IP-flows 102 with certain parameter-settings.

As such each request isn't delayed or even stopped, until the before mentioned instance 103 to a gateway and/or router 103 has found a parameter to stop the incoming requests 102. A preset for this can be the amount of requests be to certain network's infrastructure entity, which will be recognized by the traffic-checking instance of- or by such a gateway and/or router 101. The traffic-checking instance 103 can be either a built-in or a stand-alone processor unit with an appropriate storage-capacity to a gateway and/or router 101, which is for instance also able to perform SSL decryption and re-encryption and likewise.

When an IP-packet 102, as for instance a request, is coming into a network through a gateway 101, or was sent into the internet over a network router towards a destination node in the same network, all appropriate parameter may be checked in parallel.

As to possible examples of the before mentioned appropriate parameters an incoming routing towards a specific destination, the amount of requests -onto which a reply-message was sent out- coming in without an evolving message string to a reply-message, a certain frame/quantity for failures is allowed till a threshold-value is exceeded.

A parallel check may be constantly performed, by mirroring the incoming IP-messages 102 (-request / -packet / -stream) to the checking instance 103. As soon as the parallel check negotiated packages which are sent in a for instance typical DDoS-attack fashion, then all incoming traffic 102 with the appropriate parameter(-s) are dropped or redirected to a "black-hole"-instance which discharges the attack- and contaminated traffic.

The available storage can handle the OSI-layer information, including for instance source- and/or target parameter, for a shorter period of time. The storage, as a database, may check similarities within different messages and may keep a count on the quantum of for instance identical requests to the same network instance and may report the alteration in the gateway or router settings to discard any further identical requests.

The period for checking for identical incoming messages can be set on the basis of actual danger potentials, as a flooding is nowadays always within a shorter time-laps, but scenarios may be altered in this sense.

Checks by the (internal- or external) instance 103 of a gateway or router 101 are generally to be set on network routers as no other own-network router has transferred the IP-packet/-stream 102 in for instance a next-hop routing toward the relevant router. I.e., the incoming routing -and port don't correspond with for instance Next Hop Routing Protocol, NHRP.

As such is the case, every IP-packet or -stream which comes in over a gateway 101 into a network or is sent out toward the internet towards a destination node within the same network is a not-checked-yet message. As such no dependancies on other networks for the correct checks are needed and the responsibility remains with the appropriate network, i.e. the own network of the network operator. During such a check, a verification of for instance the L3- and L7-informations in the message-header may be performed, on for instance the logical L3-routing of an incoming packet respectively stream coming from an origin towards a destination in comparison with its L7-origin and -destination information. As the parallel check has been conducted, a transfer can be either be performed towards another instance, or the packet can be deleted.

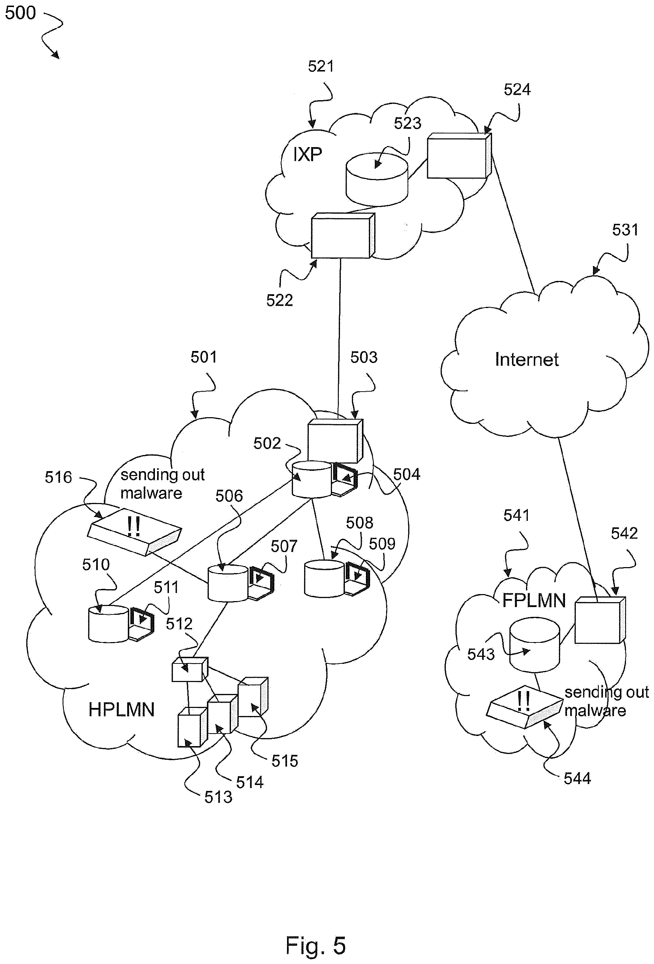

As for instance the traffic quantum exceeds certain values, it may be appropriate to install one or more servers, which act as virtualized network function (VNF) for the router 101 in the role of checking instances 103, e.g. as shown in Fig. 5. The servers 103 should have a greater computing capacity as and should be preferably installed in the vincinity of the router 101. The connectivity may preferably be of a fibre type, to keep any occuring latency to an absolute minimum.

The servers 103 may only check on for instance the L3- and L7-information, as a message (-packet / -stream) is marked with a flag of a not-checked-yet message. To do this the server 103 may have both the Layer 3 and Layer 7 information from the router 101, which mirrors these header-informations to the server 103, as well as the routing alghoritm of the router 101 on the basis of the layers.

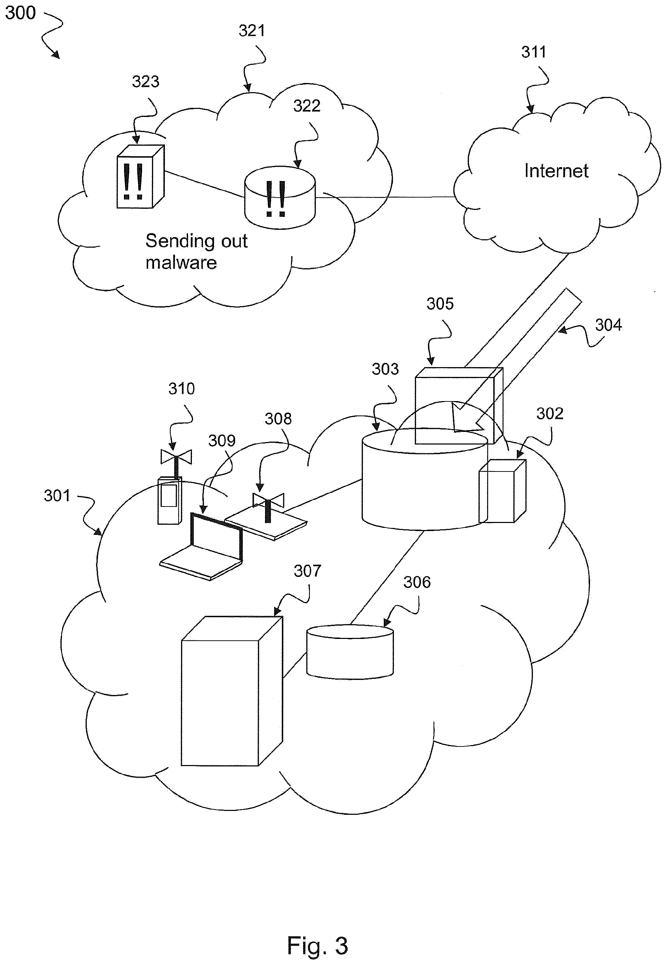

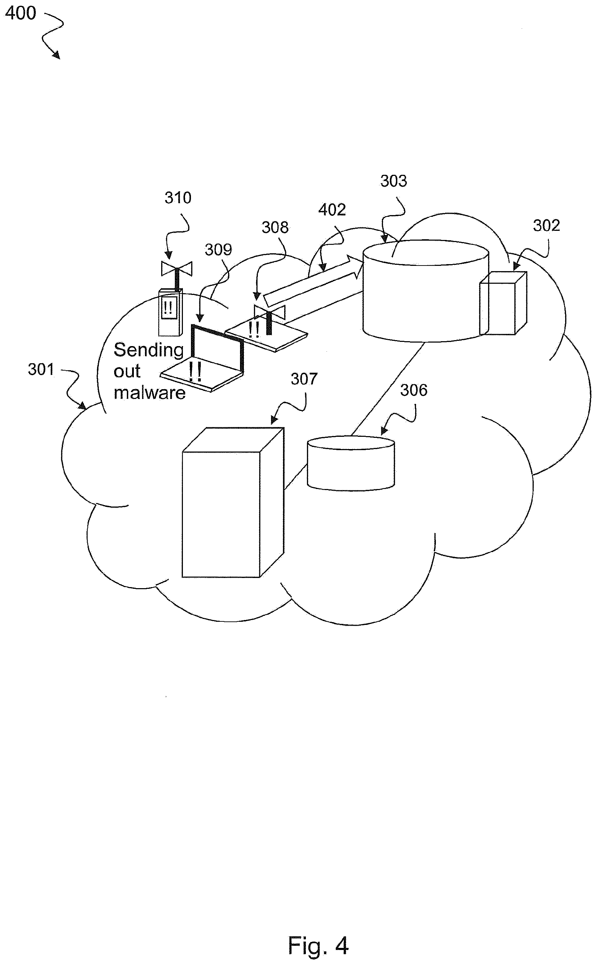

An attack can occur coming from either an outbound source, hosted in another network as depicted in Fig. 3, or coming from within the own network as a client's computer as depicted in Fig. 4 or coming from both, outbound source and inbound source as depicted in Fig. 5.

Each (network-)router 101 can determine whether an to the router incoming stream (of data) 102 is passed on by another (network-)router as in a next-hop routing, or if it is coming into the (network-) router 101 by a connected client's user equipment (UE), e.g. as depicted in the scenario of Fig. 5.

Fig. 2 shows a block diagram illustrating a network protection system 200 with a network entity 201 and a network protection entity 203 for protecting a communication network against malformed data packets according to an implementation form. The network protection system 200 includes the network protection entity 203 and the network entity 201 within the communication network. The network entity 201 is configured to transfer a stream of data packets 202 entering the network entity 201 based on network address information 206 included in the data packets 202.

The network protection entity 203 includes an interface 205 to the network entity 201 within the communication network, a memory 207 and a processor 209. The memory 207 is configured to temporarily store the network address information 206 together with application information 208 included in the data packets 202. The application information 208 indicates application and support protocols for communication via the communication network. The processor 209 is configured to detect an abnormality in the stream of data packets 202 based on checking a relation between the application information 208 and the network address information 206 of the data packets 202. If an abnormality is detected the processor 209 transmits information about the abnormality 210 to the network entity 201 for informing the network entity 201 about data packets 202 showing the abnormality. Using these information, the network entity 201 can start counteractive measures, for example discarding such data packets, generating alarms or detecting a source of the abnormal data packets, for example an attacker, an infected network component or a fault in the network.

The network address information 206 may correspond to Layer 3 information according to the Open Systems Interconnection (OSI) model. The application information 208 may correspond to Layer 7 information according to the OSI model.

The processor 209 may detect an abnormality in the stream of data packets 202 if a number of request messages sent for a specific application protocol towards a specific destination address exceeds a given threshold. The processor 209 may alternatively or additionally detect an abnormality in the stream of data packets 202 if a threshold number of identical data packets is identified in the stream of data packets 202. The processor 209 may alternatively or additionally detect an abnormality in the stream of data packets 202 if a threshold number of requests onto which a reply was sent out is identified in the stream of data packets 202. The processor 209 may alternatively or additionally detect an abnormality in the stream of data packets 202 if the requests have no evolving message string related to the reply.

The relation between the application information 208 and the network address information 206 of the data packets 202 may be based on one or more of the following events: a combination of a source address with a destination address, a combination of a source port with a source address, a combination of a destination port with a destination address, a combination of a line ID with a stream ID, a combination of an application protocol with a port number, etc.

The network address information 206 may include routing information for routing the stream of data packets 202. The processor 209 may detect the abnormality in the stream of data packets 202 if the routing information does not correspond with routing information of a routing protocol comprised in the application information 208.
The processor 209 may alternatively or additionally detect the abnormality in the stream of data packets 202 if information about an incoming routing and port from the routing information does not correspond with corresponding information of a Next Hop Routing Protocol (NHRP) from the application information 208.

The processor 209 may mirror the stream of data packets 202 in the memory 207. The processor 209 may further decrypt the stream of data packets 202, if necessary, to obtain the network address information 206 and the application information 208.

The processor 209 may transmit information about the detected abnormality 210 to other network entities within the communication network, e.g. to network entities 508, 506, 510, 512 in the network 501 as shown in Fig. 5. The network protection entity 203, e.g. the notebook 504 shown in Fig. 5 may cooperate with other network protection entities, e.g. with the notebooks 509, 507, 511 shown in Fig. 5 acting as network protection entities to protect the communication network against malformed data packets. The processor 209 may mark data packets of the stream of data packets 202 which have already been checked for an abnormality. The processor 209 may for example only transfer non-marked data packets to the memory 207 for detecting an abnormality.

Fig. 3 shows a block diagram illustrating a communication system 300 with a network protection entity 302 protecting a communication network 301 against malformed data packets from another communication network 321 according to an implementation form.

In this communication system 300 infected (or possibly infected) hardware is located in an external (or foreign or second) communication network 321 where a server 323 is located that sends out malware either initiated by a criminal attack or by a fault in the server 323. The malware is transmitted via a network router 322 of the second communication network 321 to the Internet 311 and further to a first (e.g. the own) communication network 301 where it may do damage to the first communication network 301 if not detected by a network protection.

The incoming traffic 304 that includes traffic from the Internet 311 (including the malware) that is directed to the first network 301 enters via a firewall 305 of the first network 301 the main network's gateway or router 303 respectively. The gateway or router 303 distributes the incoming traffic 304 to respective units located in the first communication network 301, for example to a home network including a client's private gateway 308, a client's notebook 309 and a client's mobile phone or smartphone 310 and/or for example to a client's professional network router 306 and a professional client hardware 307 that may include a computer network including multiple servers, for example. If the malware is able to pass the firewall 305 it may harm all network components of the first communication network 301. To inhibit or avoid this harmful scenario, a network protection entity 302 is provided nearby the main network's gateway or router 303 that is able to detect abnormalities in the incoming traffic 304 as described above with respect to Figures 1 and 2.

The network protection entity 302 may be an internal or external instance of the gateway or router 303 for checking the incoming traffic 304. The network protection entity 302 may be according to the network protection entity 103 as described above with respect to Fig. 1 or according to the network protection entity 203 as described above with respect to Fig. 2.

The network protection entity 303 includes an interface 205 to the network gateway or router 303, a memory 207 and a processor 209, for example according to the description with respect to Fig. 2. The memory 207 temporarily stores the network address information 206 together with application information 208 included in the data packets 202 of the incoming data traffic 304. The application information 208 indicates application and support protocols for communication via the communication networks 301, 311, 321. The processor 209 is configured to detect an abnormality in the incoming data traffic 304 based on checking a relation between the application information 208 and the network address information 206 of the data packets 202 of the incoming data traffic 304. If an abnormality is detected the processor 209 transmits information about the abnormality 210 to the network gateway or router 303 for informing the network gateway or router 303 about data packets 202 showing the abnormality, e.g. data packets originating from the infected hardware 323 or the infected network 321. Using these information, the network gateway or router 303 can start counteractive measures, for example discarding such data packets, generating alarms transmitted to a maintenance center or detecting a source of the abnormal data packets, for example the network address of the infected hardware 323 or at least the second communication network 321 and informing the maintenance center. In the maintenance center further analysis can be performed, for example if the malformed data results from an attacker, an infected network component or a fault in the network.

Fig. 4 shows a block diagram illustrating a communication system 400 with a network protection entity 302 protecting a communication network 301 against malformed data packets from the same communication network 301 according to an implementation form.

This communication system 400 corresponds to the communication system 300 of Fig. 3. However, in contrast to the communication system 300, only the first communication network 301 is shown to focus on the scenario in Fig. 4 where malformed data packets result from a hardware inside the first communication network 301.

The malformed data packets are originating from probably an infected hardware within the home network including for instance the client's private gateway 308, the client's notebook 309 and the client's mobile phone or smartphone 310.

The malware is transmitted within the first communication network 301 and arrives at the gateway or router 303 as inner network's incoming data stream 402 where it may do damage to all network components of the first communication network 301 if not detected by a network protection. To inhibit or avoid this harmful inner network scenario, the network protection entity 302 located nearby the main network's gateway or router 303 can detect abnormalities in the inner network's incoming traffic steam 402 as described above with respect to Figures 1, 2 and 3.

Fig. 5 shows a block diagram illustrating a communication system 500 with multiple network protection entities 504, 507, 509, 511 protecting a communication network 501 against malformed data packets from the same communication network 501 and against malformed data packets from another communication network 541 according to an implementation form.

In this communication system 500 infected (or possibly infected) hardware is located both in an external (or foreign or third) communication network 541 and in the internal network, i.e. the first communication network 501. In the external communication network 541, for example a foreign public land mobile network (FPLMN), an attacking instance, e.g. a server 544 may be located that sends out malware either initiated by a criminal attack or by a fault in the server 544. In the internal communication network 501 a second attacking instance, e.g. a server 516 may be located that sends out malware within the same communication network 501 either initiated by a criminal attack or by a fault in the server 516.

The malware from the external communication network 541 is transmitted via a network router 543 and a firewall 543 of the external communication network 541 to the Internet 531 and further via a second network 521, e.g. an internet exchange point (IXP) to the first (e.g. the own) communication network 501 where it may do damage to the first communication network 501 if not detected by a network protection. The second communication network 521 may include an incoming firewall 524, a router 523 and an outgoing firewall 522 which transmit the malware of the external attacking instance 544 towards the first communication network 501 if these components are not able to detect and block the malware.

The incoming traffic from the second communication network 521 that may include the malware from the FPLMN enters via a firewall 503 of the first communication network 301, e.g. a home public land mobile network (HPLMN) 501 a border gateway or router 502 of the HPLMN 501 and is forwarded to further network components of the HPLMN 501, e.g. a first router 510, a second router 506, a third router 508 and an exchange server 512 of a computer network including three servers 513, 514, 515, for example. The malware from the inner network server 516 is transmitted directly to the second router 506 where it may harm the HPLMN 501.

To protect the HPLMN 501, some or all of the routers or gateways of the HPLMN 501 are equipped with a network protection entity. In particular, the border router 502 of the HPLMN 501 may have a first network protection entity 504, the first router 510 may have a second network protection entity 511, the second router 506 may have a third network protection entity 507 and the third router 508 may have a fourth network protection entity 509. Each of these network protection entities may correspond to the network protection entity 302 as described above with respect to Fig. 3. The network protections entities 504, 511, 507, 509 may be implemented on a smartphone as depicted in Fig. 5. Alternatively, these network protections entities 504, 511, 507, 509 may be implemented as separate hardware or software units. They should be located nearby their respective network entities, e.g. routers 502, 506, 508, 510 in order to avoid delays in receiving their respective data streams. These network protections entities 504, 511, 507, 509 are able to detect abnormalities in their respective incoming data traffic, e.g. as described above with respect to Figures 1 to 4 and hence help to detect both the internal attacking instance 516 as well as the external attacking instance 544.

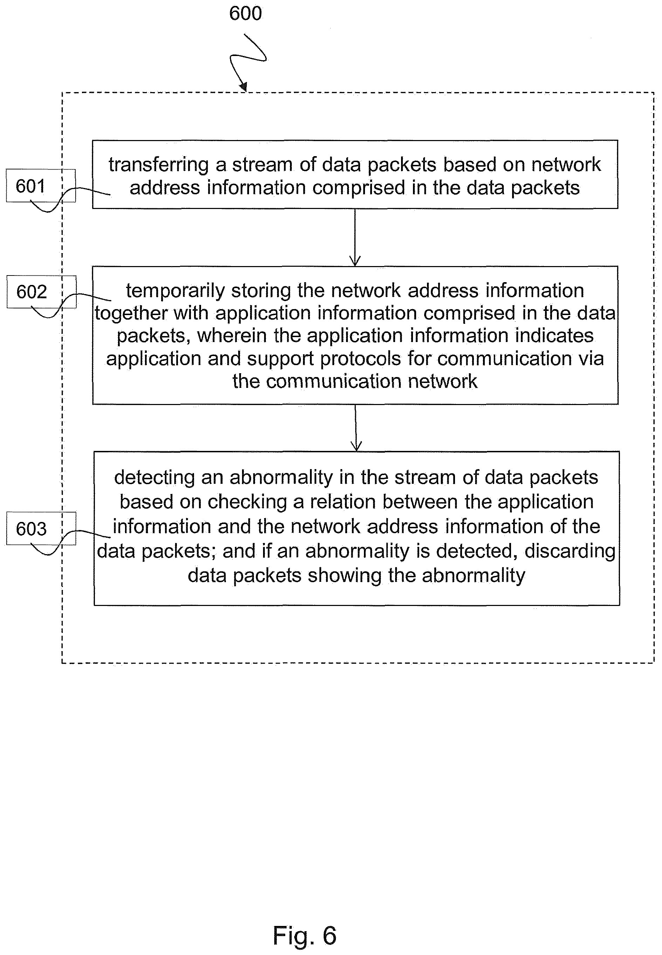

Fig. 6 shows a schematic diagram illustrating a method 600 for protecting a communication network against malformed data packets according to an implementation form.

The method 600 includes transferring 601 a stream of data packets 202 based on network address information 206 comprised in the data packets 202, e.g. data packets 202 as described above with respect to Fig. 2.

The method 600 includes temporarily storing 602 the network address information 206 together with application information 208 comprised in the data packets 202, wherein the application information 208 indicates application and support protocols for communication via the communication network.

The method 600 includes detecting 603 an abnormality in the stream of data packets 202 based on checking a relation between the application information 208 and the network address information 206 of the data packets 202; and if an abnormality is detected, discarding data packets 202 showing the abnormality.

The method 600 may perform the method steps analog to the processing steps implemented in the processor 209 of the network protection entity 200 as described above with respect to Fig. 2.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a digital signal processor (DSP), in a micro-controller or in any other side-processor or as hardware circuit within an application specific integrated circuit (ASIC) of a digital signal processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 600 as described above with respect to Fig. 6 and the techniques described above with respect to Figs. 1 to 5. Such a computer program product may include a readable non-transitory storage medium storing program code thereon for use by a computer. The program code may perform the method 600 as described above with respect to Fig. 6.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A network protection entity (203) for protecting a communication network against malformed data packets, the network protection entity (203) comprising:
an interface (205) to a network entity (201) within the communication network, wherein the network entity (201) is configured to transfer a stream of data packets (202) entering the network entity (201) based on network address information (206) comprised in the data packets (202);
a memory (207) configured to temporarily store the network address information (206) together with application information (208) comprised in the data packets (202), wherein the application information (208) indicates application and support protocols for communication via the communication network; and
a processor (209) configured to detect an abnormality in the stream of data packets (202) based on checking a relation between the application information (208) and the network address information (206) of the data packets (202); and if an abnormality is detected to transmit information about the abnormality (210) to the network entity (201) for discarding data packets (202) showing the abnormality,
wherein the processor (209) is configured to detect the abnormality in the stream of data packets (202) if a number of request messages sent for a specific application protocol and a specific destination address exceeds a given threshold,
wherein the network address information (206) comprises routing information for routing the stream of data packets (202),
**characterized in that**
the processor (209) is configured to detect the abnormality in the stream of data packets (202) if the routing information does not correspond with routing information of a routing protocol comprised in the application information (208).

2. The network protection entity (203) of claim 1,
wherein the network address information (206) corresponds to Layer 3 information according to the Open Systems Interconnection (OSI) model; and
wherein the application information (208) corresponds to Layer 7 information according to the OSI model.

3. The network protection entity (203) of one of the preceding claims,
wherein the processor (209) is configured to detect an abnormality in the stream of data packets (202) if a threshold number of identical data packets is identified in the stream of data packets (202).

4. The network protection entity (203) of one of the preceding claims,
wherein the processor (209) is configured to detect an abnormality in the stream of data packets (202) if a threshold number of requests onto which a reply was sent out is identified in the stream of data packets (202).

5. The network protection entity (203) of claim 4,
wherein the processor (209) is configured to detect the abnormality in the stream of data packets (202) if the requests have no evolving message string related to the reply.

6. The network protection entity (203) of one of the preceding claims,
wherein the relation between the application information (208) and the network address information (206) of the data packets (202) is based on at least one of the following:
a combination of a source address with a destination address,
an amount of data packets directed to a destination address exceeding a threshold,
a combination of a destination port with a destination address,
a combination of a line ID with a stream ID,
a combination in an IP-stream of an application protocol with a port number.

7. The network protection entity (203) of one of the preceding claims,
wherein the processor (209) is configured to detect the abnormality in the stream of data packets (202) if information about an incoming routing and port from the routing information does not correspond with corresponding information of a Next Hop Routing Protocol (NHRP) from the application information (208).

8. The network protection entity (203) of one of the preceding claims,
wherein the processor (209) is configured to mirror the stream of data packets (202) in the memory (207) and to decrypt the stream of data packets (202) to obtain the network address information (206) and the application information (208).

9. The network protection entity (203) of one of the preceding claims,
wherein the processor (209) is configured to transmit information about the detected abnormality (210) to other network entities within the communication network.

10. The network protection entity (203) of one of the preceding claims, cooperating with other network protection entities to protect the communication network against malformed data packets,
wherein the processor (209) is configured to mark data packets of the stream of data packets (202) already checked for an abnormality and to only transfer non-marked data packets to the memory (207) for detecting an abnormality.

11. A network protection system (200) for protecting a communication network against malformed data packets, the network protection system (200) comprising:
a network protection entity (203) according to one of the preceding claims; and
a network entity (201) within the communication network, wherein the network entity (201) is configured to transfer a stream of data packets (202) entering the network entity (201) based on network address information (206) comprised in the data packets (202).

12. A method (600) for protecting a communication network against malformed data packets, the method (600) comprising:
transferring (601) a stream of data packets (202) based on network address information (206) comprised in the data packets (202);
temporarily storing (602) the network address information (206) together with application information (208) comprised in the data packets (202), wherein the application information (208) indicates application and support protocols for communication via the communication network;
detecting (603) an abnormality in the stream of data packets (202) based on checking a relation between the application information (208) and the network address information (206) of the data packets (202); and
if an abnormality is detected, discarding data packets (202) showing the abnormality,
wherein the abnormality in the stream of data packets (202) is detected (603) if a number of request messages sent for a specific application protocol and a specific destination address exceeds a given threshold,
wherein the network address information (206) comprises routing information for routing the stream of data packets (202),
**characterized in that**
the abnormality in the stream of data packets (202) is detected (603) if the routing information does not correspond with routing information of a routing protocol comprised in the application information (208).

## Patentansprüche

1. Netzwerkschutzeinheit (203) zum Schutz eines Kommunikationsnetzwerks gegen deformierte Datenpakete, wobei die Netzwerkschutzeinheit (203) aufweist:
eine Schnittstelle (205) zu einer Netzwerkeinheit (201) innerhalb des Kommunikationsnetzwerks, wobei die Netzwerkeinheit (201) konfiguriert ist, einen Strom von Datenpaketen (202), die in die Netzwerkeinheit (201) eintreten, beruhend auf Netzwerkadressinformationen (206) zu übertragen, die in den Datenpaketen (202) enthalten sind;
einen Speicher (207), der konfiguriert ist, die Netzwerkadressinformationen (206) zusammen mit Anwendungsinformationen (208) vorübergehend zu speichern, die in den Datenpaketen (202) enthalten sind, wobei die Anwendungsinformationen (208) Anwendungs- und Unterstützungsprotokolle zur Kommunikation über das Kommunikationsnetzwerk anzeigen; und
einen Prozessor (209), der konfiguriert ist, eine Abnormalität im Strom der Datenpakete (202) beruhend auf einer Überprüfung einer Beziehung zwischen den Anwendungsinformationen (208) und den Netzwerkadressinformationen (206) der Datenpakete (202) zu erfassen; und wenn eine Abnormalität erfasst wird, Informationen über die Abnormalität (210) an die Netzwerkeinheit (201) zu senden, um Datenpakete (202) zu verwerfen, die die Abnormalität zeigen,
wobei der Prozessor (209) konfiguriert ist, die Abnormalität im Strom der Datenpakete (202) zu erfassen, wenn eine Anzahl von Anforderungsnachrichten, die für ein spezifisches Anwendungsprotokoll und eine spezifische Zieladresse gesendet werden, einen gegebenen Schwellenwert überschreitet,
wobei die Netzwerkadressinformationen (206) Verkehrslenkungsinformationen zur Verkehrslenkung des Stroms der Datenpakete (202) aufweisen,
**dadurch gekennzeichnet, dass**
der Prozessor (209) konfiguriert ist, die Abnormalität im Strom der Datenpakete (202) zu erfassen, wenn die Verkehrslenkungsinformationen nicht mit den Verkehrslenkungsinformationen eines Verkehrslenkungsprotokolls übereinstimmen, das in den Anwendungsinformationen (208) enthalten ist.

2. Netzwerkschutzeinheit (203) nach Anspruch 1,
wobei die Netzwerkadressinformationen (206) Schicht 3-Informationen gemäß dem Kommunikation offener Systeme (OSI) Modell entsprechen; und
wobei die Anwendungsinformationen (208) Schicht 7-Informationen gemäß dem OSI-Modell entsprechen.

3. Netzwerkschutzeinheit (203) nach einem der vorhergehenden Ansprüche,
wobei der Prozessor (209) konfiguriert ist, eine Abnormalität im Strom der Datenpakete (202) zu erfassen, wenn eine Schwellenanzahl identischer Datenpakete im Strom der Datenpakete (202) identifiziert wird.

4. Netzwerkschutzeinheit (203) nach einem der vorhergehenden Ansprüche,
wobei der Prozessor (209) konfiguriert ist, eine Abnormalität im Strom der Datenpakete (202) zu erfassen, wenn eine Schwellenanzahl von Anforderungen, auf die eine Antwort verschickt wurde, im Strom der Datenpakete (202) identifiziert wird.

5. Netzwerkschutzeinheit (203) nach Anspruch 4,
wobei der Prozessor (209) konfiguriert ist, die Abnormalität im Strom der Datenpakete (202) zu erfassen, wenn die Anforderungen keine sich entwickelnde Nachrichtenzeichenfolge aufweisen, die sich auf die Antwort bezieht.

6. Netzwerkschutzeinheit (203) nach einem der vorhergehenden Ansprüche,
wobei die Beziehung zwischen den Anwendungsinformationen (208) und den Netzwerkadressinformationen (206) der Datenpakete (202) mindestens auf einem des Folgenden beruht:
einer Kombination einer Quelladresse mit einer Zieladresse,
einer Menge von Datenpaketen, die an eine Zieladresse gerichtet sind, die einen Schwellenwert überschreitet,
einer Kombination eines Zielports mit einer Zieladresse,
einer Kombination einer Leitungs-ID mit einer Strom-ID,
einer Kombination in einem IP-Strom eines Anwendungsprotokolls mit einer Portnummer.

7. Netzwerkschutzeinheit (203) nach einem der vorhergehenden Ansprüche,
wobei der Prozessor (209) konfiguriert ist, die Abnormalität im Strom der Datenpakete (202) zu erfassen, wenn Informationen über eine eingehende Verkehrslenkung und einem Port aus den Verkehrslenkungsinformationen nicht mit entsprechenden Informationen eines Nächsten-Sprung-Verkehrslenkungsprotokoll (NHRP) aus den Anwendungsinformationen (208) übereinstimmen.

8. Netzwerkschutzeinheit (203) nach einem der vorhergehenden Ansprüche,
wobei der Prozessor (209) konfiguriert ist, den Strom der Datenpakete (202) im Speicher (207) zu spiegeln und den Strom der Datenpakete (202) zu entschlüsseln, um die Netzwerkadressinformationen (206) und die Anwendungsinformationen (208) zu erhalten.

9. Netzwerkschutzeinheit (203) nach einem der vorhergehenden Ansprüche,
wobei der Prozessor (209) konfiguriert ist, Informationen über die erfasste Abnormalität (210) an andere Netzwerkeinheiten innerhalb des Kommunikationsnetzwerks zu senden.

10. Netzwerkschutzeinheit (203) nach einem der vorhergehenden Ansprüche, die mit anderen Netzwerkschutzeinheiten zusammenarbeitet, um das Kommunikationsnetzwerk gegen deformierte Datenpakete zu schützen,
wobei der Prozessor (209) konfiguriert ist, Datenpakete des Stroms der Datenpakete (202) zu markieren, die bereits auf eine Abnormalität geprüft wurden, und nur nicht markierte Datenpakete an den Speicher (207) zum Erfassen einer Abnormalität zu übertragen.

11. Netzwerkschutzsystem (200) zum Schutz eines Kommunikationsnetzwerks gegen deformierte Datenpakete, wobei das Netzwerkschutzsystem (200) aufweist:
eine Netzwerkschutzeinheit (203) nach einem der vorhergehenden Ansprüche; und
eine Netzwerkeinheit (201) innerhalb des Kommunikationsnetzwerks, wobei die Netzwerkeinheit (201) konfiguriert ist, einen Strom von Datenpaketen (202), die in die Netzwerkeinheit (201) eintreten, beruhend auf Netzwerkadressinformationen (206) zu übertragen, die in den Datenpaketen (202) enthalten sind.

12. Verfahren (600) zum Schützen eines Kommunikationsnetzwerks gegen deformierte Datenpakete, wobei das Verfahren (600) aufweist:
Übertragen (601) eines Stroms von Datenpaketen (202) beruhend auf Netzwerkadressinformationen (206), die in den Datenpaketen (202) enthalten sind;
vorübergehendes Speichern (602) der Netzwerkadressinformationen (206) zusammen mit Anwendungsinformationen (208), die in den Datenpaketen (202) enthalten sind, wobei die Anwendungsinformationen (208) Anwendungs- und Unterstützungsprotokolle zur Kommunikation über das Kommunikationsnetzwerk anzeigen;
Erfassen (603) einer Abnormalität im Strom der Datenpakete (202) beruhend auf einer Überprüfung einer Beziehung zwischen den Anwendungsinformationen (208) und den Netzwerkadressinformationen (206) der Datenpakete (202); und
wenn eine Abnormalität erfasst wird, Verwerfen der Datenpakete (202), die die Abnormalität zeigen,
wobei die Abnormalität im Strom der Datenpakete (202) erfasst wird (603), wenn eine Anzahl von Anforderungsnachrichten, die für ein spezifisches Anwendungsprotokoll und eine spezifische Zieladresse gesendet werden, einen gegebenen Schwellenwert überschreitet,
wobei die Netzwerkadressinformationen (206) Verkehrslenkungsinformationen zur Verkehrslenkung des Stroms der Datenpakete (202) aufweisen,
**dadurch gekennzeichnet, dass**
die Abnormalität im Strom der Datenpakete (202) erfasst wird (603), wenn die Verkehrslenkungsinformationen nicht mit den Verkehrslenkungsinformationen eines Verkehrslenkungsprotokolls übereinstimmen, das in den Anwendungsinformationen (208) enthalten ist.

## Revendications

1. Entité de protection de réseau (203) destinée à protéger un réseau de communication contre des paquets de données mal formés, ladite entité de protection de réseau (203) comprenant :
une interface (205) vers une entité de réseau (201) à l'intérieur du réseau de communication, ladite entité de réseau (201) étant prévue pour transférer un flux de paquets de données (202) entrant dans l'entité de réseau (201) sur la base d'informations d'adresse de réseau (206) comprises dans les paquets de données (202) ;
une mémoire (207) prévue pour stocker temporairement les informations d'adresse de réseau (206) avec des informations d'application (208) comprises dans les paquets de données (202), lesdites informations d'application (208) indiquant des protocoles d'application et d'assistance pour une communication via le réseau de communication ; et
un processeur (209) prévu pour détecter une anomalie dans le flux de paquets de données (202) sur la base de la vérification d'une relation entre les informations d'application (208) et les informations d'adresse de réseau (206) des paquets de données (202) ; et, si une anomalie est détectée, pour transmettre des informations sur l'anomalie (210) à l'entité de réseau (201) pour rejeter les paquets de données (202) présentant l'anomalie,
où le processeur (209) est prévu pour détecter l'anomalie dans le flux de paquets de données (202) si un nombre de messages de demande envoyés pour un protocole d'application spécifique et une adresse de destination spécifique dépasse un seuil donné,
où les informations d'adresse de réseau (206) comprennent des informations de routage pour le routage du flux de paquets de données (202),
**caractérisée en ce que**
le processeur (209) est prévu pour détecter l'anomalie dans le flux de paquets de données (202) si les informations de routage ne correspondent pas à des informations de routage d'un protocole de routage comprises dans les informations d'application (208).

2. Entité de protection de réseau (203) selon la revendication 1,
où les informations d'adresse de réseau (206) correspondent à des informations de couche 3 conformément au modèle d'interconnexion des systèmes ouverts (ISO); et
où les informations d'application (208) correspondent à des informations de couche 7 conformément au modèle ISO.

3. Entité de protection de réseau (203) selon l'une des revendications précédentes,
où le processeur (209) est prévu pour détecter une anomalie dans le flux de paquets de données (202) si un nombre seuil de paquets de données identiques est identifié dans le flux de paquets de données (202).

4. Entité de protection de réseau (203) selon l'une des revendications précédentes,
où le processeur (209) est prévu pour détecter une anomalie dans le flux de paquets de données (202) si un nombre seuil de demandes pour lesquelles une réponse a été envoyée est identifié dans le flux de paquets de données (202).

5. Entité de protection de réseau (203) selon la revendication 4,
où le processeur (209) est prévu pour détecter l'anomalie dans le flux de paquets de données (202) si les demandes n'ont aucune chaîne de messages évolutive relative à la réponse.

6. Entité de protection de réseau (203) selon l'une des revendications précédentes,
où la relation entre les informations d'application (208) et les informations d'adresse de réseau (206) des paquets de données (202) est basée sur au moins une des combinaisons suivantes :
une combinaison d'une adresse source avec une adresse de destination,
une quantité de paquets de données dirigés vers une adresse de destination dépassant un seuil,
une combinaison d'un port de destination avec une adresse de destination,
une combinaison d'une identification de ligne avec une identification de flux,
une combinaison dans un flux IP d'un protocole d'application avec un numéro de port.

7. Entité de protection de réseau (203) selon l'une des revendications précédentes,
où le processeur (209) est prévu pour détecter l'anomalie dans le flux de paquets de données (202) si des informations sur un routage entrant et un port des informations de routage ne correspondent pas à des informations correspondantes d'un protocole de routage bond par bond (NHRP) des informations d'application (208).

8. Entité de protection de réseau (203) selon l'une des revendications précédentes,
où le processeur (209) est prévu pour refléter le flux de paquets de données (202) dans la mémoire (207) et pour décrypter le flux de paquets de données (202) afin d'obtenir les informations d'adresse de réseau (206) et les informations d'application (208).

9. Entité de protection de réseau (203) selon l'une des revendications précédentes,
où le processeur (209) est prévu pour transmettre des informations sur l'anomalie détectée (210) à d'autres entités de réseau à l'intérieur du réseau de communication.

10. Entité de protection de réseau (203) selon l'une des revendications précédentes, coopérant avec d'autres entités de protection de réseau pour protéger le réseau de communication contre des paquets de données mal formés,
où le processeur (209) est prévu pour marquer des paquets de données du flux de paquets de données (202) déjà vérifiés pour une anomalie et ne transférer que les paquets de données non marqués à la mémoire (207) pour détecter une anomalie.

11. Système de protection de réseau (200) destiné à protéger un réseau de communication contre des paquets de données mal formés, ledit système de protection de réseau (200) comprenant :
une entité de protection de réseau (203) selon l'une des revendications précédentes ; et
une entité de réseau (201) à l'intérieur du réseau de communication, ladite entité de réseau (201) étant prévue pour transférer un flux de paquets de données (202) entrant dans l'entité de réseau (201) sur la base d'informations d'adresse de réseau (206) comprises dans les paquets de données (202).

12. Procédé (600) de protection d'un réseau de communication contre des paquets de données mal formés, ledit procédé (600) comprenant :
le transfert (601) d'un flux de paquets de données (202) sur la base d'informations d'adresse de réseau (206) comprises dans les paquets de données (202) ;
la mémorisation temporaire (602) des informations d'adresse de réseau (206) avec des informations d'application (208) comprises dans les paquets de données (202), lesdites informations d'application (208) indiquant des protocoles d'application et d'assistance pour une communication via le réseau de communication ;
la détection (603) d'une anomalie dans le flux de paquets de données (202) sur la base de la vérification d'une relation entre les informations d'application (208) et les informations d'adresse de réseau (206) des paquets de données (202) ; et,
si une anomalie est détectée, le rejet des paquets de données (202) présentant l'anomalie, où l'anomalie dans le flux de paquets de données (202) est détectée (603) si un nombre de messages de demande envoyés pour un protocole d'application spécifique et une adresse de destination spécifique dépasse un seuil donné,
où les informations d'adresse de réseau (206) comprennent des informations de routage pour le routage du flux de paquets de données (202),
**caractérisé en ce que**
l'anomalie dans le flux de paquets de données (202) est détectée (603) si les informations de routage ne correspondent pas à des informations de routage d'un protocole de routage comprises dans les informations d'application (208).
